# EUROPÄISCHE PATENTANMELDUNG

(11) **EP 0 899 641 A1**
(43) Veröffentlichungstag der Anmeldung: **03.03.1999**
(21) Anmeldenummer: 97114973.7
(22) Anmeldetag: 29.08.1997
(51) Int. Cl.: G05D 16/06, F16K 35/00, F16L 37/28, F17C 13/04

(54) **Gasdrucksteuerung enthaltende Einsatzeinheit zum Einbau zwischen einer Gasflasche und einem Gasbrenner**

(71) Anmelder: Boa AG, CH-6023 Rothenburg (CH)
(72) Erfinder: Dräyer, Hans-Rudolf, 6023 Rothenburg (DE); Dutat, Dimitri, 78720 Cernay La Ville (FR)
(74) Vertreter: Blum, Rudolf Emil Ernst

(57) **Zusammenfassung**

In einer Kammer (14) des Gehäuses (1) ist ein Metallbalg (15) angeordnet. Ein Kanal (43) verbindet seinen Innenraum mit der Umgebung. Der gasdichte Metallbalg (15) endet bei einer Reaktionsflächenscheibe (5). Ein Schwenkarm (6) mit einer Prallplatte (9) ist bei einem Ende am Gehäuse (1) angelenkt. Sein entgegengesetztes Ende steht mit der Reaktionsflächenscheibe (5) in Verbindung. Druckgas strömt aus einem Austrittsmundstück (18) gegen die Prallplatte (9) und in den Innenraum (14) des Gehäuses (1) und wirkt auf die Reaktionsflächenscheibe (5). Der Druck im Innenraum (14) hängt vom Abstand zwischen der Prallplatte (9) des nach oben geschwenkten Schwenkarmes (6) und dem Austrittsmundstück (18) ab. Dieser Druck steht mit der Gegenkraft der als Federglied (4) wirkenden Umfangswand des Metallbalges (15) im Gleichgewicht. Damit wird der Druck des in einer Gasflasche (12) gespeicherten Brenngases auf einen vorgegebenen Druck beim Gasauslass (3) des Gehäuses vermindert, von welchem das Brenngas über eine Leitung einem Gasbrenner zugeführt werden kann.

## Beschreibung

Die vorliegende Erfindung betrifft eine zum Einbau zwischen einer ein Brenngas enthaltenden Gasflasche und einem Gasbrennergerät für den Haushalt- oder Campinggebrauch bestimmte Einsatzeinheit mit einer Gasdrucksteuervorrichtung, einem ersten, zur Verbindung mit einer Gasflasche bestimmten Abschnitt und einem zweiten, zur Verbindung mit einem Gasbrennergerät bestimmten Abschnitt.

Das in solchen Gasflaschen gespeicherte Brenngas ist üblicherweise Butan, das mit einem Druck von ca. 4 bar gespeichert ist, oder Propan, das mit einem Druck von ca. 16 bar gespeichert ist. Beim Verbraucher, z.B. einem gasgefeuerten Grilliergerät, muss der Druck des Brenngases auf ca. 28, bzw. 30 Millibar reduziert sein, wobei der Mengenfluss des Brenngases auf ca. 1.5 kg/Std. begrenzt wird.

Dazu werden Gasdruckregelvorrichtungen, bzw. -geräte verwendet, die mit einer jeweiligen Gasflasche gasdicht verbunden werden, und die über eine an die Gasdruckregelvorrichtung zu montierende Leitung für das druckreduzierte Gas an den Verbraucher, z.B. die Brennereinrichtung eines Grillgerätes angeschlossen werden.

Allgemein bekannte Gasdruckregelvorrichtungen an Gasflaschen der oben genannten Art weisen verschiedene Nachteile auf. Unter anderem sind die Gasdruckregelvorrichtungen, d.h. insbesondere deren Gehäuse mit den Gaseintritts- und Gasaustrittsstutzen derart ausgebildet, dass sie von der Halspartie der Gasflasche seitlich abstehen. Dadurch entsteht bei einem unsachgemässen Transport oder einer unsachgemässen Lagerung die Gefahr des Abbiegens, mit der Folge einer Verformung und auch eines Leckens an Dichtungen, und auch dass sich die Gehäuse verfangen und allgemein beschädigt werden können.

Zum Aufheben und Transportieren der mit einer Gasdruckregelvorrichtung verbundenen Gasflasche, die bekanntlich ein beträchtliches Gewicht aufweist, muss die Gasflasche von der jeweiligen Person ergriffen werden, was aufgrund der Formgebung des Gehäuses des Druckreduzierventils vorzugsweise an diesem erfolgt. Da sich das Gehäuse der Gasdruckregelvorrichtung nicht zum Ergreifen eignet, können Beschädigungen auftreten.

Hier will die Erfindung Abhilfe schaffen. Die Erfindung, wie sie in den Ansprüchen gekennzeichnet ist, löst die Aufgabe, eine Einsatzeinheit mit einer Gasdrucksteuervorrichtung zum Einbau zwischen einer Brenngas enthaltenden Gasflasche und einem Gasbrennergerät für den Haushalt- oder Campinggebrauch zu schaffen, welche äusserst einfach zu montieren ist, eine grosse Betriebssicherheit und sehr einfach Handhabung gewährleistet.

Weitere Ziele der Erfindung ergeben sich aus dem Wortlaut der abhängigen Ansprüche und aus dem Beschreibungstext.

Die durch die Erfindung erreichten Vorteile sind im wesentlichen darin zu sehen, dass die Einsatzeinheit eine robuste, kompakte und betriebssichere Vorrichtung ist, bei der die Gefahr von Beschädigungen minimalisiert ist. Zum Anschluss an die entsprechenden Geräte muss der Konsument die kleinstmögliche Anzahl von Verbindungen durchführen, wobei diese äusserst einfach ausgeführt werden können. Weiter benötigt die Einsatzeinheit bei ihrer Beschaffung keine weiteren separaten Betriebseinheiten zum Anschluss an die Geräte.

Nachfolgend wird die Erfindung anhand von einem Ausführungsweg darstellenden Zeichnungen näher erläutert. Es zeigt:
Fig. 1 eine Schnittansicht einer Ausführung des Erfindungsgegenstandes
Fig. 2 eine Seitenansicht eines Teiles der Betätigungsvorrichtung für die Flaschenabsperrventileinheit und
Fig. 3 eine Variante der Ausführung nach Fig. 2, und
Fig. 4 eine Aufsicht auf die in Fig. 1, bzw. 2 gezeigte Ausführung.

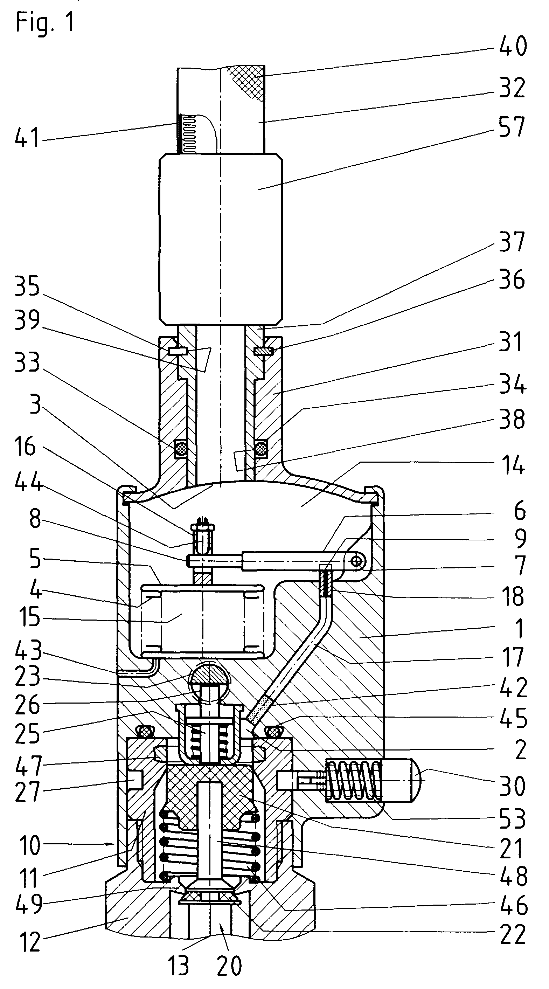

In Fig. 1 ist das Gehäuse der Gasdruckregelvorrichtung mit der Bezugsziffer 1 bezeichnet. Das Gehäuse 1 ist auf einer Gasflasche 12 aufgesteckt. Diese Gasflasche 12 ist ein handelsübliches Produkt und enthält Butan mit einem Druck von ca. 4 bar oder Propan mit einem Druck von 16 bar.

Beim entgegengesetzten Ende ist das Gehäuse 1 mit einem Gasschlauch 32 verbunden, der zu einem entsprechenden Verbraucher führt, z.B. einem Gasbrenner eines Grilliergerätes. Der Gasschlauch 32 ist gegen das Gehäuse 1 abgedichtet, mit demselben unlösbar verbunden, jedoch relativ zum Gehäuse 1 rotierbar und ist allgemein aus einem von einem Schutzmantel 40 und einem darin angeordneten flexiblen Wellschlauch 41 z.B. aus Metall gebildet.

Im Gehäuse 1 ist eine Kammer 14 ausgebildet, in welcher die wesentlichsten Bauteile zur Regelung des Gasdruckes angeordnet sind.

Beim unteren Bereich des Gehäuses 1 befindet sich im Gaseinlass 2, der in der gezeichneten Nichtbetriebsstellung durch einen Ventilbetätigungskolben 21 der noch zu beschreibenden Ventilbetätigungseinheit 20 der Gasflasche 12 verschlossen ist.

Der Gaseinlass 2 ist von einem Gaskanal 17 gefolgt, in welchem ein Filter 42 angeordnet ist. Der Gaskanal 17 endet bei einem Austrittsmundstück 18, welches in die Kammer 14 hineinragt.

Das Austrittsmundstück 18 ist gegen eine Prallplatte 9 eines Schwenkarms 6 gerichtet, der im Gegensatz zu bekannten Ausführungen in solchen Gasdruckregelvorrichtungen als einarmiger Hebel ausgebildet ist. Dieser Schwenkarm ist bei einem Ende 7 am Gehäuse 1 angelenkt.

In der Kammer 14 ist weiter ein gasdicht ausgebildeter Metallbalg 15 angeordnet. Seine obere Endplatte dient als Reaktionsflächenscheibe 5 und die gewellte Umfangwand als Federglied 4. Bei seinem unteren Ende ist der Metallbalg 15 fest mit dem Gehäuse 1 verbunden. Der Innenraum des Metallbalges 15 steht über einem Kanal 43 mit der Umgebung in Verbindung. Das heisst, im Innenraum des Metallbalges 15 herrscht Umgebungsdruck vor. Auf der Reaktionsflächenscheibe 5 ist ein Aufsatz 16 angeordnet, in welchem das freie Ende 8 des Schwenkarmes 6 aufgenommen ist. Der Aufsatz 10 enthält einen Justierstift 44 zum Justieren der Regelglieder, d.h. des Schwenkarms 6 und des Metallbalges 15 der Gasdruckregelvorrichtung. Der Metallbalg 15 ist derart ausgerichtet, dass die Reaktionsflächenscheibe 5 senkrecht zur Symmetrieachse 13 des rotationssymmetrischen Innenraumes des noch zu beschreibenden, unten angeordneten Verbindungsabschnittes 10 des Gehäuses 1 verläuft.

Es ist ersichtlich, dass der Abstand zwischen der Prallplatte 9 und dem am Gehäuse 1 angelenkten Ende 7 des Schwenkarmes 6 um ein Vielfaches kleiner ist als der Abstand zwischen der Prallplatte 9 mit dem im Aufsatz 16 der Reaktionsflächenscheibe 5 angeordneten Ende 8 des Schwenkarmes 6. Diese Dimensionierung erlaubt ein sehr feines Regulieren des Gasdruckes und verbessert die Einstell- und Kraftverhältnisse im Vergleich mit früheren Konstruktionen.

Die Arbeitsweise der oben beschriebenen Bauglieder ist wie folgt:

Durch den Druck des aus dem Austrittsmundstück 18 ausströmenden und auf die Prallplatte 9 auftreffenden Gases wird der Schwenkarm 6 nach oben geschwenkt. In der Kammer 14 wird ein Druck aufgebaut, der allgemein vom Abstand zwischen dem Austrittsmundstück 18 und der Prallplatte 9 des etwas hochgeschwenkten Schwenkarms 6 abhängt.

Der in der Kammer 14 vorherrschende Druck wirkt auf die Reaktionsflächenscheibe 5 des Metallbalges 15, in dessen Innenraum Umgebungsdruck vorherrscht. Der Differenzdruck bewirkt somit eine nach unten gerichtete Kraft an der Reaktionsflächenscheibe 5. Dieser Kraft wirkt nun der Federkraft der gewellten Umfangswand, d.h. des Federgliedes 4 des Metallbalges 15 entgegen.

Es herrscht somit ein Gleichgewicht vor, wenn die Federkraft des Metallbalges gleich der Druckkraft auf der Reaktionsflächenscheibe 5 ist, welches Gleichgewicht den Abstand zwischen der Prallplatte 9 des etwas hochgeschwenkten Schwenkarmes 6 bestimmt, und somit die druckvermindernde Drosselwirkung zwischen der Prallplatte 9 und dem Schwenkarm 6.

Bei dem beschriebenen Ausführungsbeispiel ist ein Metallbalg 15 vorhanden. Die Ausführung des Balges in Metall erlaubt eine Temperaturbelastung der gesamten Einheit nach der Norm pr. EN 1775. Andere Ausführungen sehen einen Balg aus Kunststoff oder Gummi vor. Entscheidend ist, dass ein Balg als aktives Element verwendet wird, das im Gegensatz zu Membrankonstruktionen in einfachster Weise zwei Funktionen in sich vereinigt, nämlich Reaktionsfläche und Eigensteifigkeit zur Rückstellung.

Im Vergleich mit den bekannten Konstruktionen, die eine aktive, federbelastete Membran aufweisen, ist die Verschiebung der Reaktionsflächenscheibe 5 viel kleiner und weiter kann das Flächenmass der Reaktionsfläche viel kleiner ausgebildet sein. Damit ergibt sich eine höhere Betriebssicherheit und ergeben sich kleinere Abmessungen der gesamten Gasdruckregelvorrichtung.

Im Balg kann zusätzlich eine Sicherheitsvorrichtung angeordnet sein, die verhindert, dass im Falle eines zu hohen Druckes eine Überdehnung des Balges 15 und übermässige Beanspruchung des Schwenkarmes 6 stattfinden kann. Allgemein soll bemerkt werden, dass die gesamte Vorrichtung gemäss entsprechenden Normen ausgeführt ist, z.B. entsprechend der EU-Norm EN 88 sowie pr. EN 1775.

Beim dem Schwenkarm 6 zu Grunde liegenden Hebelsystem ist der Drehpunkt im Gegensatz zu bekannten Lösungen nach aussen verlegt (relativ zur Prallplatte 9) was die Kraftverhältnisse und auch die Verhältnisse beim Einstellen der Regelglieder verbessert.

Die Lage des Austrittsmundstückes 18 ist verstellbar, um die Grundeinstellung der Regelvorrichtung vornehmen zu können. Der beispielsweise mittels einem Schraubenzieher verstellbare, gegebenenfalls federbelastete Justierstift 44 im Aufsatz 10 auf der Reaktionsflächenscheibe 5 dient zur Feineinstellung mit endgültiger Kalibrierung.

Das Gehäuse 1 endet unten bei einem Verbindungsabschnitt 10 zum Aufsetzen der Gasdruckregelvorrichtung auf den Halsabschnitt 11 einer Gasflasche 12 bekannter Ausbildung. Bei seinem oberen Ende ist der Halsabschnitt 11 durch eine unverlierbar im Gehäuse 1 eingesetzte Dichtung 45 gegen das Gehäuse 1 abgedichtet.

Im Halsabschnitt 11 ist ein Ventilbetätigungskolben 21 der Gasflasche 12 angeordnet, der in einer Zwischenstellung gezeigt ist.

Der Ventilbetätigungskolben 21 ist auf einer Druckfeder 46 abgestützt und durch diese nach oben vorgespannt. Beim Bereich des oberen Endes des Ventilbetätigungskolbens 21 ist im Halsabschnitt 11 eine weitere Dichtung 47 eingesetzt. Weiter ist der Ventilbetätigungskolben 21 mit einem Stift 48 verbunden, der auf dem Schliesskörper 22 der insgesamten Flaschenabsperrventileinheit 20 aufliegt, welcher Schliesskörper 22 durch ein (nicht gezeichnetes) Federglied nach oben vorgespannt ist.

In der gezeichneten Stellung dieser Bauteile ist der Innenraum der Gasflasche 12 durch den Schliesskörper 22 gegen aussen abgedichtet. Ist die Gasdruckregelvorrichtung von der Gasflasche 12 abgehoben, bewegt sich der Ventilbetätigungskolben 21 auf Grund der Vorspannkraft der Feder 46 nach oben, bis er am eingeschnürten Abschnitt des Halsabschnittes 11 anliegt, so dass er die Dichtung 47 berührt. In dieser Stellung ist folglich der Innenraum der Gasflasche doppelt, nämlich durch die Dichtung 47 mit den anliegenden Ventilbetätigungskolben 21 und durch den am Ventilsitz 49 anliegenden Schliesskörper 22 gegen die Umgebung abgedichtet.

Wird der Ventilbetätigungskolben 21 aus der gezeichneten Mittelstellung weiter nach unten gedrückt, stösst der auf dem Schliesskörper 22 aufliegende Stift 48 den Schliesskörper 22 nach unten weg vom Ventilsitz 49, so dass das Gas aus dem Innenraum der Gasflasche ausströmen kann.

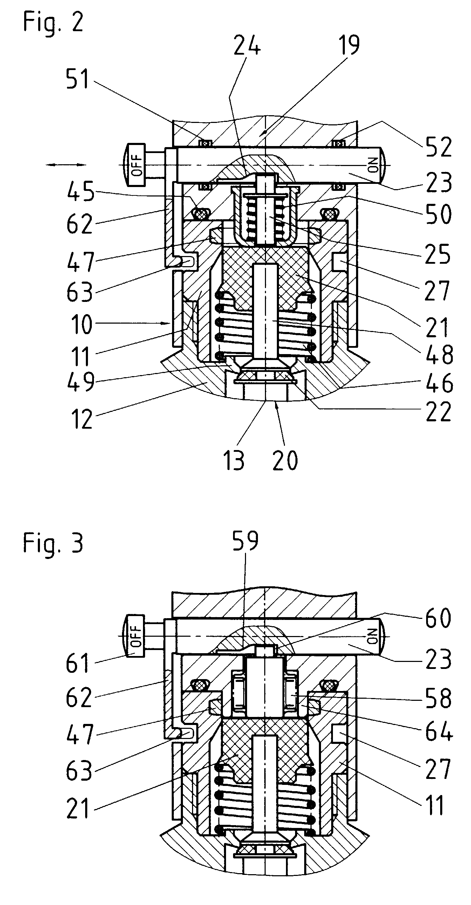

Dieses Öffnen der Flaschenabsperrventileinheit 20, also des Austrittes aus der Gasflasche 12 wird durch eine im Gehäuse angeordnete Betätigungsvorrichtung 19 (siehe auch Fig. 2) bewerkstelligt. Das heisst grundsätzlich, dass die Flaschenabsperrventileinheit 20 nur bei aufgesetztem Gehäuse 1 geöffnet werden kann.

Ein Sperrmechanismus, der weiter unten noch beschrieben werden wird, verhindert, dass das Gehäuse 1 bei offener Flaschenabsperrventileinheit 20 von der Gasflasche 12 abgehoben werden kann.

Im Gehäuse 1 ist ein abgedichtet angeordneter Steuerschieber 23 gelagert. Dieser Schieber 23 weist eine krummlinig verlaufende Steuerfläche 24 auf, die durch den Boden einer im Steuerschieber 23 ausgebildeten Nut gebildet ist. Ein Stift 25 liegt auf dieser Steuerfläche 24 auf, der durch eine Druckfeder 50 vorgespannt ist. Die Breite der Nut ist derart gewählt, dass die Seitenwangen 26 in einer Gleitberührung mit dem Stift 25 stehen. Dadurch ist der Steuerschieber 23 durch den Stift 25 gegen ein Verdrehen gesichert und seitlich arretiert.

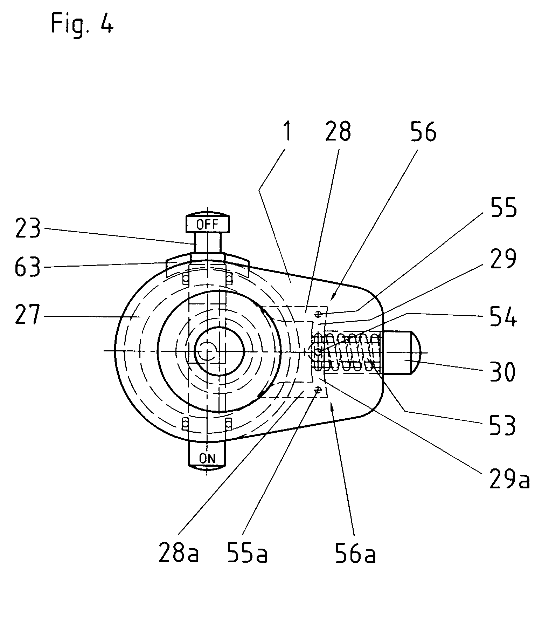

Die Form der Nut, d.h. der Verlauf der Steuerfläche ist aus den Fig. 2 mit insbesondere 3 ersichtlich. Beim gemäss der Darstellung in diesen Figuren 2 und 3 linken Endbereich ist eine Auflaufschräge 59 (siehe Fig. 3) vorhanden und beim rechts liegenden Endbereich eine Anschlagfläche 60. Das linke Ende des Steuerschiebers 23 weist einen Kopf 61 auf, dessen Durchmesser grösser ist als der Durchmesser der Bohrung, in welcher der Steuerschieber 23 eingesetzt ist. Somit kann der Steuerschieber 23 in beiden seiner Endstellungen nicht aus der Bohrung hinausgleiten.

In der in den Figuren gezeigten Stellung befindet sich der Steuerschieber 23 in der FlaschenventilSchliessstellung. Der Stift 25 (siehe Fig. 2) liegt an der tiefsten Stelle der Nut, auf dem Nutenboden, der Steuerfläche 24 auf. Wird der Steuerschieber 23 gemäss der Darstellung der Fig. 2 nach links geschoben, wird der Stift 25 nach unten hinausbewegt und drückt den Ventilbetätigungskolben 21 nach unten, so dass der Schliesskörper 22 vom Ventilstift 49 abhebt.

Beim Steuerschieber 23 sind Dichtungen 51, 52 angeordnet. Diese Dichtungen 51, 52 können entfallen, falls gemäss einer in der Fig. 3 gezeigten, weiteren Ausführung beim Stift 25 ein Metallbalg 58 an Stelle der Feder 50 angeordnet ist, der einerends mit dem Stift 25 und andererends mit dem Gehäuse 1 verbunden ist.

Weiter steht bei dieser Ausführung vom unteren Gehäuseende ein Halsteil 64 nach unten ab, der in den Halsabschnitt 11 der Gasflasche 12 hineinragt. Dieser Halsteil 64 überdeckt die Dichtung 47, so dass an dieser Stelle ein weiteres Abdichten gewährleistet ist. Es könnte vorkommen, dass durch einen Fremdkörper oder eine Beschädigung beim Bereich der oberen Dichtung 45 das Dichtvermögen beeinträchtigt wird. Durch den heruntergezogenen, an der Dichtung 47 anliegenden Halsteil 64 ist jedoch in einem solchen Fall immer noch eine absolute Dichtheit gewährleistet.

Das Gehäuse 1 ist mit der Gasflasche 12 über deren Halsabschnitt 11 wie folgt verriegelt:

Im Gehäuse 1 ist ein durch eine Feder 53 nach aussen gespanntes Druckknopfglied 30 angeordnet.

Am Druckknopfglied 30 sind zwei Winkelarmglieder 56, 56a bei der Arlenkstelle 54 angelenkt. Jedes Winkelarmglied 56, 56a besteht aus einem ersten Armabschnitt 28 bzw. 28a und einem ungefähr rechtwinklig dazu verlaufenden zweiten Armabschnitt 29, bzw. 29a.

Bei der Übergangsstelle zwischen dem ersten Armabschnitt 28, bzw. 28a und dem zweiten Armabschnitt 29, bzw. 29a ist das Winkelarmglied 56, 56a an einer Anlenkstelle 55 bzw. 55a im Gehäuse 1 drehbar gelagert.

Der Halsabschnitt 11 der Gasflasche 12, der in dem Verbindungsabschnitt 10 des Gehäuses 1 eingesetzt ist, weist eine Umfangsnut 27 auf.

Im gezeichneten Verriegelungszustand der Winkalarmglieder 56, 56a liegen die ersten Armabschnitte 28, 28a in dieser Umfangsnut 27. Wird das Druckknopfglied 30 gegen die Federkraft der Feder 53 eingedrückt, drehen sich die Winkelarmglieder 56, 56a um die Anlenkstellen 55, 55a. Die Armabschnitte 28, 28a schwenken folglich um die Anlenkstellen 55, 55a und bewegen sich aus der Umfangsnut 27 hinaus, so dass das Gehäuse 1 der Gasdruckregelvorrichtung von der Gasflasche 12 abgehoben werden kann.

Der Steuerschieber 23 weist eine zusätzliche Sicherungsvorkehrung auf, die aus einem mit dem Steuerschieber 23 fest verbundenen, von demselben abstehenden Arm 62 besteht und an seinem beim Bereich der Umfangsnut 27 gelegenen Ende in einer bogenförmigen Riegel 63 übergeht.

In den Fig. 2-4 ist der Steuerschieber 23 in der "AUS"-Stellung dargestellt. In dieser Stellung befindet sich der Riegel 63 ausserhalb der Umfangsnut 27. Somit kann bei eingedrücktem Druckknopfglied 30 das Gehäuse 1 der Gasdruckregelvorrichtung von der Gasflaschen abgehoben werden.

Ist der Steuerschieber 23 in der "EIN"-Stellung (das Absperrventil der Gasflasche 12 ist offen), liegt der bogenförmige Riegel 63 in der Umfangsnut 27. Folglich ist das Gehäuse 1 durch den Riegel 63 mit der Gasflasche 12 verriegelt. Das heisst, dass wenn sich der Steuerschieber 23 in der "EIN"-Stellung befindet und das Absperrventil der Gasflasche 12 in der Offenstellung ist, das Gehäuse 1 auch bei einer irrtümlichen Betätigung des Druckknopfgliedes 30 nicht von der Gasflasche 12 getrennt werden kann.

Die Umfangnut 27 einerseits, und insbesondere die ersten Armabschnitte 28, 28a andererseits sind derart bemessen, dass sie die insgesamte Gewichtskraft der Gasflasche 12 aufnehmen können. Das heisst, die Gasflasche 12 mit dem damit verbundenen Gehäuse 1 kann aufgehoben und transportiert werden, indem eine Person lediglich das Gehäuse 1 erfasst. Irgendwelche Beschädigungen, Verbiegungen, Langzeitschäden etc. sind somit ausgeschlossen.

Weiter nimmt der in der Umfangsnut 27 liegende Riegel 63 in offenem Zustand des Absperrventils der Gasflasche 12 neben den Armabschnitten 28 und 28 a der Winkelarmglieder zusätzlich Axialkräfte auf, die durch den Gasdruck oder das Aufheben der Gasflasche 12 beim Erfassen des Gehäuses 1 auftreten.

Bein Gasauslass 3 der Kammer 14 endet das Gehäuse 1 mit einem Gasauslassstutzen 31 (Fig. 4).

Der Gasauslassstutzen 31 weist eine erste Innenumfangrille 33 und darüber eine zweite Innenumfangrille 35 auf.

Im Gasauslassstutzen 31 ist der Verbindungsstutzen 37 eines Gasschlauches 32 eingesteckt, der zum Verbraucher, z.B. einem Gasbrenner führt. Dieser Gasschlauch weist ein inneres Wellrohr 41 auf, das von einem Schutzmantel 40, z.B. einem Geflecht- und/oder Kunststoffschlauch, umgeben ist. Der Gasschlauch 32 kann auch aus anderen Materialien, z.B. Kunststoff bestehen.

In der ersten Innenumfangrille 33 des Gasauslassstutzens 31 ist ein Dichtungsring 34 eingelegt, der gegen den dortigen glattwandigen Aussenumfangsabschnitt 38 des Verbindungsstutzens 37 dichtend anliegt.

Im Verbindungsstutzen 37 ist weiter eine Aussenumfangsrille 39 ausgebildet. Ein Sprengring 36 ist in dieser Aussenumfangsrille 39 und der Innenumfangsrille 35 des Gasauslassstutzens 31 eingesetzt. Damit ist der Gasschlauch 32 unverlierbar, jedoch drehbar mit dem Gehäuse 1 der Gasdruckregelvorrichtung verbunden.

Der Sprengring 36 ist so dimensioniert, dass dieser das Gewicht der Gasflasche 12 und des Gehäuses 1 voll aufnehmen kann. Irgendwelche Beschädigungen, Langzeitschäden durch unsachgemässe Handhabung über den Verbindungsschlauch sind somit ausgeschlossen. Der Anschluss 57 muss nicht, wie in der Fig. 1 gezeichnet ist, geradlinig verlaufend ausgebildet sein. Er kann ebensogut als ein 90° Bogenstück ausgebildet sein.

## Patentansprüche

1. Zum Einbau zwischen einer ein Brenngas enthaltender Gasflasche (12) und einem Gasbrennergerät für den Haushalt- oder Campinggebrauch bestimmte Einsatzeinheit mit einer Gasdrucksteuervorrichtung, einem ersten, zur Verbindung mit einer Gasflasche (12), bestimmten Abschnitt (10) und einem zweiten, zur Verbindung mit einem Gasbrennergerät bestimmten Abschnitt, dadurch gekennzeichnet, dass die Einsatzeinheit ein Gehäuse (1) mit einem beim Bereich des ersten Abschnittes angeordneten Gaseinlass (2) und einen beim Bereich des zweiten Abschnittes angeordneten Gasauslass (3) aufweist, in welchem Gehäuse (1) die Gasdrucksteuervorrichtung angeordnet ist, welche Gasdrucksteuervorrichtung eine einerseits durch Umgebungsdruck und andererseits durch Gasdruck beaufschlagbare und mit einem Federglied verbundene Reaktionsflächenscheibe (5) aufweist, dass der erste Abschnitt (10) zur Erstellung einer Verbindung mit der Gasflasche (12) bestimmte Schnellschlussverbindungsglieder (30, 53, 56, 56a) aufweist, und dass der zweite Abschnitt ein mit dem Gehäuse (1) unverlierbar, jedoch relativ zu demselben rotierbar verbundenes, biegsames Schlauchstück (32) aufweist.

2. Einsatzeinheit mit einer Gasdrucksteuervorrichtung nach Anspruch 1, dadurch gekennzeichnet, dass die Reaktionsflächenscheibe (5) aus einem Metall oder einer Metallegierung besteht und einstückig mit dem Federglied (4) verbunden ist.

3. Einsatzeinheit mit einer Gasdrucksteuervorrichtung nach Anspruch 1 oder 2, dadurch gekennzeichnet, dass die Drucksteuervorrichtung einen als einarmigen Hebel ausgebildeten Schwenkarm (6) aufweist, der bei einem Ende (7) am Gehäuse (1) angelenkt ist und beim entgegengesetzten Ende (8) mit der Reaktionsflächenscheibe (5) gekoppelt ist, welcher Schwenkarm (6) eine zwischen den zwei Enden (7; 8) angeordnete, von zuströmendem Gas beaufschlagbare Prallplatte (9) aufweist, deren Abstand von dem am Gehäuse (1) angelenkten Ende (7) des Schwenkarmes (6) um ein Vielfaches kleiner als von dem mit der Reaktionsflächenscheibe (5) gekoppelten Ende (8) ist.

4. Einsatzeinheit mit einer Gasdrucksteuervorrichtung nach einem der vorangehenden Ansprüche mit einem Verbindungsabschnitt (10) zum Aufsetzen des Gehäuses (1) auf den Halsabschnitt (1) einer Gasflasche (12), welcher Verbindungsabschnitt (10) einen rotationssymetrischen Innenraum zur Aufnahme des Halsabschnittes (11) der Gasflasche (12) aufweist, dadurch gekennzeichnet, dass die Symmetrieachse (13) des Innenraumes rechtwinklig zur Reaktionsflächenscheibe (5) und parallel zur Längsrichtung des Gehäuses (1) verläuft, und dass die Reaktionsflächenscheibe (5) in Gasdurchströmrichtung an einer örtlichen Stelle im Gehäuse (1) zwischen dem Verbindungsabschnitt (10) und dem Gasauslass (3) angeordnet ist.

5. Einsatzeinheit mit einer Gasdrucksteuervorrichtung nach einem der vorangehenden Ansprüche, dadurch gekennzeichnet, dass die Drucksteuervorrichtung einen in einer Kammer (14) des Gehäuses (1) angeordneten, gasdicht geschlossenen Metallbalg (15) mit einem Innenraum aufweist, der mit der Umgebung in Verbindung steht, welcher Metallbalg (15) bei einem Endbereich mit dem Gehäuse (1) ortsfest verbunden ist und beim entgegengesetzten Endbereich die Reaktionsflächenscheibe (5) aufweist, auf welcher Reaktionsflächenscheibe (5) ein Aufsatz (16) angeordnet ist, in welchem das entgegengesetzte Ende (8) des Schwenkarmes (6) zur Koppelung mit der Reaktionsflächenscheibe (5) aufgenommen ist.

6. Einsatzeinheit mit einer Gasdrucksteuervorrichtung nach einem der vorangehenden Ansprüche, dadurch gekennzeichnet, dass der Gaseinlass (2) von einem im Gehäuse (1) angeordneten Gaskanal (17) mit einem Austrittsmundstück (18) gefolgt ist, welches zum Beaufschlagen der Prallplatte (9) derselben unmittelbar gegenüberliegt.

7. Einsatzeinheit mit einer Gasdrucksteuervorrichtung nach einem der vorangehenden Ansprüche, mit einer Betätigungsvorrichtung (19) zum Öffnen und Schliessen der Flaschenabsperrventileinheit (20) einer mit der Gasdrucksteuervorrichtung verbundenen Gasflasche (12), welche Flaschenabsperrventileinheit (20) einen federbeaufschlagten Ventilbetätigungskolben (21) aufweist, der mit einem Schliesskörper (22) in Verbindung steht,
dadurch gekennzeichnet, dass die Betätigungsvorrichtung (19) einen quer zur Längsrichtung des Gehäuses (1) zwischen einer Freigabestellung und Schliessstellung verschiebbaren Steuerschieber (23) mit einer Steuerfläche (24) aufweist, auf welcher ein gegen den Steuerschieber (23) federvorgespannter Stift (25) aufliegt, dessen freies Ende zur Auflage auf den Ventilbetätigungskolben (21) bestimmt ist und in der Freigabestellung des Steuerschiebers (23) eine Verschiebung des Ventilbetätigungskolbens (21) um ein Abheben des Schliesskörpers (22) von seinem Ventilsitz (49) zu bewirken verursacht.

8. Einsatzeinheit mit Gasdrucksteuervorrichtung nach Anspruch 7, wobei der Ventilbetätigungskolben (21) in einem eine Innenumfangsdichtung (47) aufweisenden Halsabschnitt (11) der Gasflasche (12) angeordnet ist, dadurch gekennzeichnet, dass vom unteren Ende des Gehäuses (12) ein in den Halsabschnitt (11) hineinragenden Halsteil (64) absteht, welcher Halsteil (64) an der Innenumfangsdichtung (47) dichtend anliegt.

9. Einsatzeinheit nach Anspruch 8, dadurch gekennzeichnet, dass der Stift (25) durch einen die Federvorspannung aufbringenden Metallbalg (58) hindurch verläuft, welcher Metallbalg (58) bei einem Ende mit dem Stift (25) und beim entgegengesetzten Ende mit dem Gehäuse (1) fest verbunden ist, so dass der Bereich des Steuerschiebers (23) im Gehäuse (1) gegen einen Gaseintritt abgedichtet ist.

10. Einsatzeinheit mit einer Gasdrucksteuervorrichtung nach Anspruch 7, dadurch gekennzeichnet, dass die Steuerfläche (24) durch einen krummlinig verlaufenden Boden einer Nut gebildet ist, der mindestens annähernd rechtwinklig zum Nutenboden verlaufende Seitenwangen (26) aufweist, derart, dass der in diese Nut hineinragende Stift (25) den Steuerschieber gegen eine Verdrehung im Gehäuse (1) sichert und dass der krummlinig verlaufende Boden der Nut der Steuerfläche (24) eine tiefste Stelle aufweist, in welche der Stift (25) in der Freigabestellung des Steuerschiebers (23) hineinragt.

11. Einsatzeinheit mit einer Gasdrucksteuervorrichtung nach einem der Ansprüche 1-10, mit einer Arretiervorrichtung zur Arretierung des Gehäuses auf einem eine Umfangsnut (27) aufweisenden Halsabschnitt (11) einer Gasflasche (12), dadurch gekennzeichnet, dass die Arretiervorrichtung mindestens ein Winkelarmglied (56; 56a) mit jeweils einem ersten Armabschnitt (28; 28a) und einem zweiten Armabschnitt (29; 29a) aufweist, welche Winkelarmglieder (56; 56a) bei der Übergangsstelle vom ersten zum zweiten Armabschnitt (29; 29a) im Gehäuse (1) schwenkbar gelagert ist, jeder erste Armabschnitt (28; 28a) zum Eingreifen in die Umfangsnut (27) des Halsabschnittes (11) ausgebildet und jeder zweite Armabschnitt (29; 29a) an einem federbelasteten Druckknopfglied (30) angelenkt ist, derart, dass ein Eindrücken des Druckknopfgliedes (30) eine solche Schwenkbewegung der Winkelarmglieder (56;56a) bewirkt, dass die ersten Armabschnitte (28; 28a) zur Freigabe der Gasflasche (12) aus der Umfangsnut (27) hinausgeschwenkt werden.

12. Einsatzeinheit mit einer Gasdrucksteuervorrichtung nach Anspruch 11, dadurch gekennzeichnet, dass vom Steuerschieber (23) ein Arm (62) mit einem beim Bereich der Umfangsnut (27) angeordneten Riegelglied (63) absteht, welcher Arm (62) an einer solchen Stelle mit dem Steuerschieber (23) verbunden ist, dass das Riegelglied (63) in der Schliessstellung des Steuerschiebers (23) in die Umfangsnut (27) hineinragt und damit eine Trennung des Gehäuses (1) von der Gasflasche (12) verunmöglicht, und in der Freigabestellung des Steuerschiebers (23) die Umfangsnut (27) freigibt, um ein Trennen des Gehäuses (1) von der Gasflasche (12) zu ermöglichen.

13. Einsatzeinheit mit einer Gasdrucksteuervorrichtung nach Anspruch 11, dadurch gekennzeichnet, dass jeder erste Armabschnitt (28; 28a) als kraftübertragendes Koppelglied zwischen dem Gehäuse (1) und einer damit verbundenen Gasflasche (12) ausgebildet und derart dimensioniert ist, dass er das gesamte Gewicht der Gasflasche (12) übertragen kann, derart, dass eine Gasflasche (12) mit der damit gekoppelten Gasdruckregelvorrichtung durch ein Ergreifen lediglich des Gehäuses (1) der Gasdruckregelvorrichtung aufgehoben und transportiert werden kann.

14. Einsatzeinheit mit einer Gasdrucksteuervorrichtung nach einem der vorangehenden Ansprüche, dadurch gekennzeichnet, dass der Gasauslass (3) des Gehäuses (1) als Gasauslassstutzen (31) zur Verbindung mit einem an einen Verbraucher anzuschliessenden bestimmten Gasschlauch (32) ausgebildet ist, welcher Gasauslassstutzen (31) eine erste Innenumfangsrille (33) zur Aufnahme eines Dichtungsringes (34) und eine zweite Innenumfangsrille (35) zur Aufnahme eines Sprengringes (36) aufweist.

15. Einsatzeinheit mit einer Gasdrucksteuervorrichtung nach Anspruch 14, mit einem mit dem Gehäuse (1) verbundenen Gasschlauch (32), welcher Gasschlauch (32) bei einem starren rohrförmigen Verbindungsstutzen (37) endet, dadurch gekennzeichnet, dass der Verbindungsstutzen (37) in dem Gasauslassstutzen (31) eingesetzt ist und mindestens beim Bereich der ersten Innenumfangsrille (33) mit dem eingesetzten Dichtungsring (34) einen glattwandigen, den Dichtungsring (34) berührenden Aussenumfangsabschnitt (38) aufweist, so dass der Innenraum (14) des Gehäuses (1) durch den Dichtungsring (34) gegen die Umgebung abgedichtet ist, und beim Bereich der zweiten Innenumfangsrille (35) eine Aussenumfangsrille (39) zur Aufnahme eines Abschnittes des Sprengringes (36) auf-weist, derart, dass der Gasschlauch (32) abgedichtet und drehbar mit dem Gehäuse verbunden ist.
